# EUROPÄISCHE PATENTSCHRIFT

(11) **EP 3 453 979 B1**
(45) Veröffentlichungstag und Bekanntmachung des Hinweises auf die Patenterteilung: **30.12.2020**
(21) Anmeldenummer: 18192348.3
(22) Anmeldetag: 04.09.2018
(51) Int. Cl.: F24D 19/10, H04W 84/20

(54) **VERFAHREN ZUR ZUORDNUNG EINES DEZENTRALEN GERÄTS EINES REGELUNGSSYSTEMS ZUR VERTEILUNG DER HEIZ- UND/ODER KÜHLLEISTUNG EINES HEIZ- UND/ODER KÜHLSYSTEMS ZU EINEM REGELKANAL EINER ZENTRALEN REGELEINHEIT**
METHOD FOR ALLOCATING A DECENTRALIZED DEVICE OF A CONTROL SYSTEM FOR DISTRIBUTING THE HEATING AND/OR COOLING CAPACITY OF A HEATING AND/OR COOLING SYSTEM TO A CONTROL CHANNEL OF A CENTRAL CONTROL UNIT
PROCÉDÉ D'ATTRIBUTION D'UN APPAREIL DÉCENTRALISÉ D'UN SYSTÈME DE RÉGULATION PERMETTANT LA DISTRIBUTION DE LA PUISSANCE DE CHAUFFAGE ET / OU DE REFROIDISSEMENT D'UN SYSTÈME DE CHAUFFAGE ET / OU DE REFROIDISSEMENT À UN CANAL RÉGULATEUR D'UNE UNITÉ DE RÉGULATION CENTRALISÉE

(30) Priorität: 08.09.2017 DE 102017120719
(43) Veröffentlichungstag der Anmeldung: 13.03.2019
(73) Patentinhaber: REHAU AG + Co, 95111 Rehau (DE)
(72) Erfinder: Pommer, Willi, 90427 Nürnberg (DE); Gottschalk, Rene, 90562 Heroldsberg (DE)

(56) Entgegenhaltungen:
- DE-A1- 10 105 959
- DE-A1-102007 053 833
- DE-A1-102013 012 906
- DE-U1- 29 709 716

## Beschreibung

Die vorliegende Erfindung betrifft ein Verfahren zur Zuordnung eines dezentralen Geräts eines Regelungssystems, das eine oder mehrere zentrale Regelungseinheiten, wobei die Regeleinheit(en) jeweils mehrere Funktionsbereiche, insbesondere Regelkanäle, aufweisen, und mehrere dezentrale Geräte zur Übermittlung von Sensorwerten, Zustandssignalen und/oder durch den Nutzer eingegebenen Informationen umfasst, zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, zu einem Funktionsbereich oder mehreren Funktionsbereichen einer zentralen Regeleinheit oder mehrerer zentraler Regeleinheiten. Darüber hinaus betrifft die vorliegende Erfindung ein Regelungssystem zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, das eine oder mehrere zentrale Regeleinheiten und mehrere dezentrale Geräte zur Übermittlung von Sensorwerten, Zustandssignalen und/oder durch den Nutzer eingegebenen Informationen umfasst, wobei das mindestens eine dezentrale Gerät und die zentrale Regeleinheit(en) zur Bereitstellung der Operationen zur Durchführung eines erfindungsgemäßen Verfahrens ausgebildet sind.

Derartige Regelungssysteme zur Verteilung der Heiz- und/oder Kühlleistung eines Heiz- und/oder Kühlsystems sind aus dem Stand der Technik bekannt, beispielsweise aus den folgenden Patentschriften: DE10105959, DE29709716U, DE102007053833 und DE 10 2013 101 568 A1. Ein Verfahren gemäß dem Oberbegriff des Anspruchs 1 und ein Regelsystem gemäß dem Oberbegriff des Anspruchs 8 ist aus der Patentschrift DE10105959A1 bekannt. In der Praxis übliche Regelungssysteme für Heiz- und/oder Kühlsysteme, insbesondere Flächenheizungs- und/oder -kühlungssysteme sind entweder aus Verdrahtungseinheiten, an denen Raumtemperaturregler angeschlossen sind, oder aus zentralen Regelungseinheiten, die mit Raumgeräten bzw. Geräten (beispielsweise Raumtemperaturfühler, Luftfeuchtigkeitsmesser, Anwesenheitserkennungseinrichtungen, Heizkörperreglern und dergleichen sowie aus Kombinationen dieser Funktionen mit Möglichkeiten der Eingabe von Vorgaben durch den Nutzer sowie Möglichkeiten der Ausgabe von Informationen an den Nutzer) entweder über einen kabelgebundenen (Bustechnologie) oder einen drahtlosen Kommunikationskanal (Funktechnologie) verbunden sind, aufgebaut. Allgemein wird ein Kommunikationskanal, über den mehrere Teilnehmer miteinander kommunizieren können, als Bussystem oder Bus bezeichnet. Dieser Begriff wird im Besonderen nur für einen Kommunikationskanal verwendet, bei dem zum Nachrichtenaustausch ein Kabel oder eine andere elektrische Verbindung verwendet wird. Im Folgenden wird dieses kabelgebundene Kommunikationssystem als Bussystem oder kurz als Bus bezeichnet; das für die Buskommunikation verwendete Kabel als Buskabel; die in einem Gerät integrierte Einheit zur Kommunikation über das Bussystem als Busschnittstelle. Die Verwendung eines Bussystems verringert durch die gemeinsame Verwendung einer Leitung für mehrere Teilnehmer den Verkabelungsaufwand der für den Aufbau eines Regelungssystems erforderlich ist. Ein auf Funktechnik basierender Kommunikationskanal, der ebenfalls den Nachrichtenaustausch zwischen mehreren Teilnehmern ermöglicht, wird im Folgenden als Funksystem bezeichnet, die in einem Gerät integrierte Einheit zur Kommunikation über das Funksystem als Funkschnittstelle. Derartige kommunikative Geräte können zusätzlich mit Fühlern ausgestattet sein.

Bei der Inbetriebnahme des Heiz- und/oder Kühlsystems müssen die dezentralen Geräte diesen zentralen Regelungseinheiten und innerhalb dieser zentralen Regelungseinheiten wiederum einem Funktionsbereich dieser zentralen Regelungseinheit, beispielsweise einem Regelkanal, zugeordnet werden. Der Vorgang dieser Zuordnung des dezentralen Geräts zu einem Funktionsbereich der zentralen Regelungseinheit, insbesondere einem Regelkanal der zentralen Einheit, wird wie hierin verwendet als "Pairing" bezeichnet. Solche dezentralen Geräte können optional mit Sensoren, beispielsweise Temperaturfühlern, Raumfeuchtigkeitsfühlern und dergleichen, ausgestattet sein. Das Pairing erfolgt üblicherweise, indem die zentrale Regelungseinheit durch den Inbetriebsetzer in den sogenannten Pairingmodus versetzt wird, in einem weiteren Schritt das mit der zentralen Regelungseinheit zu verbindende dezentrale Geräte ebenfalls, beispielsweise durch einen entsprechenden Tastendruck, in den Pairingmodus gebracht wird. Daraufhin verbinden sich das dezentrale Geräte und die zentrale Regelungseinheit durch den Austausch von Adressinformationen miteinander. Damit erfolgt auch die Festlegung auf einen bestimmten Regelungskanal der zentralen Regelungseinheit. Dieser Schritt wird nacheinander für alle dezentralen Geräte und alle zentralen Regelungseinheiten durchgeführt.

Nachteilig an dem derzeit durchgeführten Pairingvorgang wird gesehen, dass der Inbetriebsetzer jeden einzelnen Pairingvorgang vorzunehmen hat, indem er jeweils zentrale Regelungseinheit und danach das dezentrale Gerät in den Pairingmodus versetzen muss, die jeweilige Vorrichtung also bedienen muss. Dazu muss vor allem in Heiz- und/oder Kühlsystemen mit mehreren zentralen Regelungseinheiten und einer größeren Anzahl an dezentralen Geräten mehrfach zwischen den jeweiligen Vorrichtungen hin- und hergelaufen werden und der Pairingvorgang muss jedesmal aufs Neue durchgeführt werden. Die Durchführung der Inbetriebnahme des Heiz- und/oder Kühlsystems wird dadurch zeitaufwendig und neigt zu Fehlern bei der Zuweisung der dezentralen Geräte zu den betreffenden Funktionsbereichen, insbesondere den betreffenden Regelkanälen, der zentralen Regeleinheit.

An dieser Stelle setzt die vorliegende Erfindung ein, der die Aufgabe zugrunde liegt, ein Verfahren zur Zuordnung eines dezentralen Geräts eines Regelungssystems zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, zu einem Funktionsbereich oder mehreren Funktionsbereichen einer zentralen Regeleinheit oder mehrerer zentraler Regeleinheiten zur Verfügung zu stellen, das die Nachteile des Stands der Technik überwindet. Insbesondere soll das erfindungsgemäße Verfahren den Zeitaufwand bei der Inbetriebsetzung des Heiz- und/oder Kühlsystems verringern und die Fehlerwahrscheinlichkeit bei der Zuweisung während des Inbetriebnahmeprozesses reduzieren. Darüber hinaus liegt die vorliegende Erfindung in der Bereitstellung eines Regelungssystems zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, das zur Bereitstellung der Operationen zur Durchführung eines derartigen Verfahrens ausgebildet ist.

Diese und andere Aufgaben werden durch ein Verfahren mit den Merkmalen des Anspruches 1 bzw. durch ein Regelungssystem mit den Merkmalen des Anspruches 8 gelöst. Vorteilhafte Ausführungsformen der vorliegenden Erfindung sind in den abhängigen Ansprüchen beschrieben.

Gemäß der vorliegenden Erfindung wurde erkannt, dass die Zuordnung eines dezentralen Geräts eines Regelungssystems eines Heiz- und/oder Kühlsystems zu einem Funktionsbereich oder mehreren Funktionsbereichen einer zentralen Regeleinheit auch dadurch erfolgen kann, dass die Geräte- und/oder Adressinformationen des dezentralen Geräts und der zentralen Regeleinheit zunächst von einer Informationsübertragungsvorrichtung, beispielsweise insbesondere einem Smartphone, einem Tablet oder einem Laptop, erfasst werden.

Durch eine auf der Informationsübertragungsvorrichtung installierten Software, beispielsweise einer entsprechenden App, werden nun die so erfassten Vorrichtungen logisch miteinander verbunden und es kann durch den Inbetriebsetzer die Zuweisung der dezentralen Geräte auf einzelne Funktionsbereiche der zentralen Regeleinheit, insbesondere auf die einzelnen Regelkanäle der zentralen Regeleinheit, erfolgen. Durch die Informationsübertragungsvorrichtung werden daher die Adressinformationen und auch die Typen der zentralen Geräte aufgenommen, entweder durch Auswahl aus einer von der Informationsübertragungsvorrichtung angebotenen Liste oder durch Übertragung der entsprechenden Informationen direkt vom dezentralen Gerät und/oder der zentralen Regeleinheit an die Informationsübertragungsvorrichtung. Danach werden durch die Informationsübertragungsvorrichtung die entsprechenden Informationen der dezentralen Geräte an die zentrale(n) Regeleinheit(en) übermittelt und eine logische Verknüpfung der Vorrichtungen miteinander vorgenommen. Abschließend kann die eigentliche Zuordnung der dezentralen Geräte zu einem Funktionsbereich oder mehreren Funktionsbereichen der zentralen Regeleinheit(en) ausgelöst werden und erfolgen.

Dementsprechend liegt die vorliegende Erfindung in der Bereitstellung eines Verfahrens zur Zuordnung eines dezentralen Geräts eines Regelungssystems, das eine oder mehrere zentrale Regelungseinheiten, wobei die Regeleinheit(en) jeweils mehrere Funktionsbereiche, insbesondere Regelkanäle, aufweisen, und mehrere dezentrale Geräte zur Übermittlung von Sensorwerten, Zustandssignalen und/oder durch den Nutzer eingegebenen Informationen umfasst, zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, zu einem Funktionsbereich oder mehreren Funktionsbereichen einer zentralen Regeleinheit oder mehrerer zentraler Regeleinheiten, wobei das dezentrale Gerät und/oder die zentrale Regeleinheit zur Übermittlung und/oder zum Empfangen von Geräte- und/oder Adressinformationen des dezentralen Geräts und/oder der zentralen Regeleinheit an eine bzw. von einer Informationsübertragungsvorrichtung eingerichtet ist/sind, wobei das Verfahren die folgenden Stufen umfasst:
(i) Erfassen der Geräte- und/oder Adressinformationen der zentralen Regeleinheit oder der zentralen Regeleinheiten durch die Informationsübertragungsvorrichtung;
(ii) Erfassen der Geräte- und/oder Adressinformationen des dezentralen Geräts durch die Informationsübertragungsvorrichtung;
(iii) Erzeugen einer logischen Verknüpfung zwischen dem dezentralen Gerät und einer oder mehreren zentralen Regeleinheiten;
(iv) Übermitteln einer Information an die zentrale Regeleinheit oder die zentralen Regeleinheiten, dass das dezentrale Gerät jeweils einem oder mehreren Funktionsbereichen der jeweiligen zentralen Regeleinheit zuzuordnen ist; und
(v) Speichern der Zuordnung oder der Zuordnungen durch die zentrale Regeleinheit oder die zentralen Regeleinheiten.

Darüber hinaus liegt die vorliegende Erfindung in der Bereitstellung eines Regelungssystems zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, das eine oder mehrere zentrale Regeleinheiten und mehrere dezentrale Geräte zur Übermittlung von Sensorwerten, Zustandssignalen und/oder durch den Nutzer eingegebenen Informationen umfasst, wobei die dezentralen Geräte und/oder die zentrale Regeleinheit(en) zur Übermittlung und/oder zum Empfangen von Geräte- und/oder Adressinformationen des dezentralen Geräts und/oder der zentralen Regeleinheit(en) an eine bzw. von einer Informationsübertragungsvorrichtung eingerichtet ist/sind und dass das mindestens eine dezentrale Gerät und die zentrale Regeleinheit(en) zur Bereitstellung der Operationen zur Durchführung eines erfindungsgemäßen Verfahrens ausgebildet sind.

Vorzugsweise handelt es sich bei dem Heiz- und/oder Kühlsystem um eine Flächenheizung/-kühlung, in bestimmten Anwendungen ergänzt um Geräte für die Luftbehandlung oder den Luftaustausch, insbesondere eine Fußbodenheizung/-kühlung, oder ein Heizungssystem mit Heizkörpern. In einem solchen System wird ein Temperiermedium Heizkreisen zum Kühlen/Heizen zugeführt. Fußbodenheizung/-kühlung bedeutet, dass die Heizschleifen/Heizkreise beispielsweise im Estrich unter dem Fußboden verlaufen. Die Heizschleifen können auch in einer anderen geeigneten Struktur installiert sein. So können die Heizschleifen auch in der Wand oder Decke installiert sein.

Bevorzugt ist das Regelungssystem für das Heiz- und/oder Kühlsystem, insbesondere Flächenheizungs- und/oder -kühlungssysteme aus zentralen Regelungseinheiten, die mit dezentralen Geräten über einen kabelgebundenen (Bustechnologie) und/oder einen drahtlosen Kommunikationskanal (Funktechnologie) verbunden sind, aufgebaut.

Hinsichtlich des erfindungsgemäßen Verfahrens kann es auch von Nutzen sein, wenn die Stufen (i) bis (v) für mehr als ein dezentrales Gerät, insbesondere für alle dezentralen Geräte, durchlaufen werden. Wird mehr als ein dezentrales Gerät mit dem erfindungsgemäßen Verfahren mit einem oder mehreren Funktionsbereichen, insbesondere Regelkanälen, einer zentralen Regeleinheit verbunden, wird die Inbetriebnahme des entsprechenden Heiz- und/oder Kühlsystems weiter vereinfacht.

Es kann auch günstig sein, wenn das Erfassen der Geräte- und/oder Adressinformationen der zentralen Regeleinheit(en) durch die Informationsübertragungsvorrichtung in Stufe (i) durch Auswahl aus der Geräte- und/oder Adressinformationen der zentralen Regeleinheit(en) aus einer auf der Informationsübertragungsvorrichtung gespeicherten Informationsliste oder durch Übertragung der Geräte- und/oder Adressinformationen der zentralen Regeleinheit(en) von der zentralen Regeleinheit/den zentralen Regeleinheiten an die Informationsübertragungsvorrichtung erfolgt. Alternativ oder zusätzlich dazu kann es sich als hilfreich erweisen, wenn das Erfassen der Geräte- und/oder Adressinformationen des dezentralen Geräts durch die Informationsübertragungsvorrichtung in Stufe (ii) durch Auswahl aus der Geräte- und/oder Adressinformationen des dezentralen Geräts aus einer auf der Informationsübertragungsvorrichtung gespeicherten Informationsliste oder durch Übertragung der Geräte- und/oder Adressinformationen des dezentralen Geräts von dem dezentralen Gerät an die Informationsübertragungsvorrichtung erfolgt. Dies stellt ein schnelles, zuverlässiges und praktikables Erfassen der Geräte- und/oder Adressinformationen der zentralen Regeleinheit(en) und/oder des dezentralen Geräts/der dezentralen Geräte durch die Informationsübertragungsvorrichtung sicher. In diesem Zusammenhang kann es kann bevorzugt sein, wenn die Übertragung der Geräte- und/oder Adressinformationen der zentralen Regeleinheit(en) von der zentralen Regeleinheit(en) und/oder des dezentralen Geräts von dem dezentralen Gerät an die Informationsübertragungsvorrichtung optisch, insbesondere durch ein aufgebrachtes charakteristisches Muster oder durch Aussenden von Lichtsignalen durch eine Leuchtdiode oder eine Matrix von Leuchtdioden zur Ausgabe eines charakteristischen Musters, durch Ausgabe eines Musters oder einer Folge von Mustern durch eine Reihe von beleuchteten Symbolen, oder unter Verwendung einer Funkkommunikation, insbesondere WiFi oder Bluetooth oder NFC, erfolgt. Eine derartige Übertragung hat sich in der Praxis als besonders einfach und sicher erwiesen.

Es kann auch vorteilhaft sein, wenn eine Anbindung des dezentralen Geräts zur Kommunikation und/oder Datenverteilung an die zentrale Regelungseinheit(en) kabelgebunden, insbesondere als ein elektronisches Bussystem, ausgebildet ist oder per Funk erfolgt.

Weiter kann es auch bevorzugt sein, wenn das dezentrale Gerät als Raumtemperaturregler, Raumtemperaturfühler, Luftfeuchtigkeitsmesser, Anwesenheitserkennungseinrichtung, Heizkörperregler, Regeleinheit für andere Komponenten, Außenfühler, ein Fenster- oder Türkontakt und dergleichen, als eine der vorgenannten Vorrichtungen, die zur Eingabe von Vorgaben durch den Nutzer sowie zur Ausgabe von Informationen an den Nutzer eingerichtet ist, oder als eine Kombination dieser Vorrichtungen ausgebildet ist.

Das erfindungsgemäße Regelungssystem, das Heiz- und/oder Kühlsystem, dessen Regelung durch das erfindungsgemäße Regelungssystem erfolgt, sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Die vorliegende Erfindung wird im Folgenden unter Bezugnahme auf bevorzugte Ausführungsformen des erfindungsgemäßen Regelungssystems im Detail beschrieben, wobei die beigefügte Zeichnung die Erfindung leichter verständlich machen soll. Dabei versteht es sich, dass die dargestellten Ausführungsformen die vorliegende Erfindung exemplarisch veranschaulichen und nicht einschränken sollen. Es zeigt:

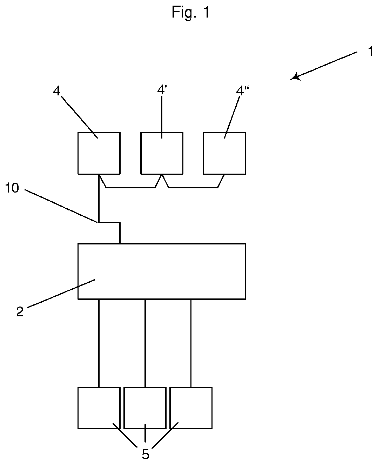

- Fig. 1: eine schematische Darstellung eines busbasierten Regelungssystems zur Verteilung der Heiz- und/oder Kühlleistung eines Heiz- und/oder Kühlsystems nach dem Stand der Technik.

In Fig. 1 ist exemplarisch ein Regelungssystem 1 zur Verteilung der Heiz- und/oder Kühlleistung eines Heiz- und/oder Kühlsystems, insbesondere einer Fußbodenheizung, schematisch dargestellt. In der in Fig. 1 dargestellten Ausführungsform umfasst das Regelungssystem 1 eine zentrale Regelungseinheit 2. Mit der zentralen Regelungseinheit 2 sind über eine Bus-Verbindung 10 drei dezentrale Geräte 4, 4', 4" verbunden. Weiter sind mit der zentralen Regelungseinheit 2 weitere Vorrichtungen 5, wie beispielsweise Stellantriebe für Ventile der Heizkreise, Pumpen und dergleichen verbunden.

Bei den dezentralen Geräten 4, 4', 4" kann es sich beispielsweise um Raumtemperaturregler, Raumtemperaturfühler, Luftfeuchtigkeitsmesser, Anwesenheitserkennungseinrichtung, Heizkörperregler, Regeleinheiten für andere Komponenten, Außenfühler, Fenster- oder Türkontakte und dergleichen, um eine der vorgenannten Vorrichtungen, die zur Eingabe von Vorgaben durch den Nutzer sowie zur Ausgabe von Informationen an den Nutzer eingerichtet ist, oder als eine Kombination dieser Vorrichtungen ausgebildet ist, handeln. Die dezentralen Geräte 4, 4', 4" verfügen jeweils über eine Busschnittstelle. In anderen Ausführungsformen kann das Regelungssystem 1 auch mindestens eine weitere zentralen Regelungseinheit 2 und/oder mindestens eine Erweiterungseinheit umfassen, mit denen weitere dezentrale Geräten 4, 4', 4" und/oder weitere Vorrichtungen 5 verbunden sein können.

Das Regelungssystem 1 kann beispielsweise zur Regelung einer Fußbodenheizung herangezogen werden. Bei einer derartigen Fußbodenheizung wird ein Temperiermedium (z.B. Wasser oder ein Wasser/Glycol-Gemisch) entlang einer Vorlaufleitung, in der in der Regel ein Vorlauf-Temperaturfühler angeordnet ist, zu einem Vorlauf-Heizkreisverteiler geführt, der das Temperiermedium auf mehrere Heizkreise verteilt. Die Heizkreise führen das Temperiermedium durch die Flächen, durch die der betreffende Raum beheizt oder gekühlt werden soll. Jeder Heizkreis verfügt über ein Ventil mit einem Stellantrieb, durch den der Durchfluss durch den jeweiligen Heizkreis geregelt wird. Beim Durchströmen der Heizkreise gibt das Temperiermedium Wärmeenergie an einen Verbraucher (beispielsweise der Estrich des zu beheizenden oder zu kühlenden Raums) ab. Die Heizkreise münden in einen Rücklauf-Heizkreisverteiler, von dem das Temperiermedium in eine Rücklaufleitung fließt, durch die es zurück zu einem Temperierelement zur Erwärmung des Temperiermediums (z. B. eine Wärmepumpe oder eine Brennwerttherme) geleitet wird.

Zur Inbetriebnahme des Heiz- und/oder Kühlsystems müssen die dezentralen Geräte 4, 4', 4" einem Funktionsbereich der zentralen Regelungseinheit 2 zugeordnet werden, wobei es sich bevorzugt um einen Regelkanal der zentralen Regelungseinheit 2 handelt. Für die Durchführung der Zuordnung erfasst die inbetriebnehmende Person bzw. der Inbetriebnehmer zunächst die Geräte- und Adressinformationen der einzelnen dezentralen Geräte 4, 4', 4" mit einer Informationsübertragungsvorrichtung, bei der es sich insbesondere um ein Smartphone, ein Tablet, ein Laptop oder dergleichen handeln kann. Anschließend erfasst der Inbetriebnehmer auch die Geräte- und Adressinformationen der zentralen Regelungseinheit 2 mit der Informationsübertragungsvorrichtung. Die Informationserfassung kann dabei jeweils unabhängig durch Auswahl aus einer von der Informationsübertragungsvorrichtung angebotenen Liste oder durch Übertragung der entsprechenden Informationen vom dezentralen Gerät 4, 4'. 4" und/oder der zentralen Regeleinheit 2 an die Informationsübertragungsvorrichtung erfolgen.

Die Übertragung der entsprechenden Informationen vom dezentralen Gerät 4, 4'. 4" und/oder der zentralen Regeleinheit 2 an die Informationsübertragungsvorrichtung erfolgt dabei bevorzugt optisch, insbesondere durch ein aufgebrachtes charakteristisches Muster oder durch Aussenden von Lichtsignalen durch eine Leuchtdiode oder eine Matrix von Leuchtdioden zur Ausgabe eines charakteristischen Musters, durch Ausgabe eines Musters oder einer Folge von Mustern durch eine Reihe von beleuchteten Symbolen, oder unter Verwendung einer Funkkommunikation, insbesondere WiFi, Bluetooth oder NFC. Besonders bevorzugt ist auf den dezentralen Geräten 4, 4'. 4" und/oder der zentralen Regeleinheit 2/den zentralen Regeleinheiten jeweils ein entsprechender Barcode oder QR-Code aufgebracht, der den Geräte- und/oder Adressinformationen der jeweiligen Vorrichtung entspricht oder durch den die Geräte- und/oder Adressinformationen der jeweiligen Vorrichtung über das Internet abrufbar sind. Die jeweils aufgebrachten Barcodes oder QR-Codes werden durch die Informationsübertragungsvorrichtung gelesen werden.

Durch die Informationsübertragungsvorrichtung werden so die Adressinformationen und auch die Typen der zentralen Geräte und der zentralen Regeleinheit(en) 2 aufgenommen. Anschließend übermittelt die Informationsübertragungsvorrichtung die entsprechenden Informationen der dezentralen Geräte 4, 4', 4" an die zentrale(n) Regeleinheit(en) 2, wobei dies via WiFi, Bluetooth, NFC oder dergleichen erfolgen kann, und es wird eine logische Verknüpfung der Vorrichtungen miteinander erzeugt. Daraufhin wird die eigentliche Zuordnung der dezentralen Geräte 4, 4', 4" zu einem Funktionsbereich oder mehreren Funktionsbereichen der zentralen Regeleinheit(en) 2, wobei es sich bevorzugt um entsprechende Regelungskanäle handelt, an der Informationsübertragungsvorrichtung oder an der zentralen Regeleinheit 2/den zentralen Regeleinheiten ausgelöst. Diese Zuordnung(en) wird/ werden durch die zentrale(n) Regeleinheit(en) 2 gespeichert. Auf diese Weise ist eine einfach durchzuführende und eindeutige Zuordnung der dezentralen Geräte 4, 4', 4" zu einem Funktionsbereich, insbesondere einem Regelkanal, der zentralen Regelungseinheit(en) 2 gewährleistet.

Das erfindungsgemäße Zuordnungsverfahren kann gleichzeitig oder nacheinander für mehrere dezentrale Geräte 4, 4', 4", insbesondere für alle dezentrale Geräte 4, 4", 4", des Heiz- und/oder Kühlsystems durchgeführt werden.

In alternativen Ausführungsformen des erfindungsgemäßen Regelungssystems kann mindestens eines der dezentralen Geräte 4, 4', 4" auch über einen drahtlosen Kommunikationskanal (Funktechnologie) mit der zentralen Regelungseinheit 2/den zentralen Regelungseinheiten verbunden sein. Auch Kombinationen aus kabelgebundener (Bustechnologie) und drahtloser Kommunikationstechnik (Funktechnologie) sind für die Verbindung dezentralen Geräte 4, 4', 4" mit der zentralen Regelungseinheit 2/den zentralen Regelungseinheiten möglich.

Die vorliegende Erfindung wurde unter Bezugnahme auf die in den Figuren gezeigten Ausführungsformen der vorliegenden Erfindung im Detail beschrieben. Es versteht sich, dass die vorliegende Erfindung nicht auf die gezeigten Ausführungsformen beschränkt ist, sondern sich der Umfang der vorliegenden Erfindung aus den Ansprüchen ergibt.

## Patentansprüche

1. Verfahren zur Zuordnung eines dezentralen Geräts (4, 4', 4") eines Regelungssystems (1), das eine oder mehrere zentrale Regelungseinheiten (2), wobei die Regeleinheit(en) (2) jeweils mehrere Regelkanäle aufweisen, und mehrere dezentrale Geräte (4, 4', 4") zur Übermittlung von Sensorwerten, Zustandssignalen und/oder durch den Nutzer eingegebenen Informationen umfasst, zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, zu einem Regelkanal oder mehreren Regelkanälen einer zentralen Regeleinheit (2) oder mehrerer zentraler Regeleinheiten, wobei das dezentrale Gerät (4, 4', 4") und die zentrale(n) Regeleinheit(en) (2) zur Übermittlung und zum Empfangen von Geräte- und/oder Adressinformationen des dezentralen Geräts (4, 4', 4") oder der zentralen Regeleinheit (2) an eine bzw. von einer Informationsübertragungsvorrichtung eingerichtet ist/sind,
wobei das Verfahren die folgenden Stufen umfasst:
(i) Erfassen der Geräte- und/oder Adressinformationen der zentralen Regeleinheit (2) oder der zentralen Regeleinheiten durch die Informationsübertragungsvorrichtung;
(ii) Erfassen der Geräte- und/oder Adressinformationen des dezentralen Geräts (4, 4', 4") durch die Informationsübertragungsvorrichtung;
(iii) Erzeugen einer logischen Verknüpfung zwischen dem dezentralen Gerät (4, 4', 4") und einer oder mehreren zentralen Regeleinheiten (2);
(iv) Übermitteln einer Information an die zentrale Regeleinheit (2) oder die zentralen Regeleinheiten, dass das dezentrale Gerät jeweils einem oder mehreren Regelkanälen der jeweiligen zentralen Regeleinheit (2) zuzuordnen ist; und
(v) Speichern der Zuordnung oder der Zuordnungen durch die zentrale Regeleinheit (2) oder die zentralen Regeleinheiten.

2. Verfahren gemäß Anspruch 1, **dadurch gekennzeichnet, dass** die Stufen (i) bis (v) für mehr als ein dezentrales Gerät (4, 4', 4"), insbesondere für alle dezentralen Geräte (4, 4, 4"), durchlaufen werden.

3. Verfahren gemäß Anspruch 1 oder Anspruch 2, **dadurch gekennzeichnet, dass** das Erfassen der Geräte- und/oder Adressinformationen der zentralen Regeleinheit(en) (2) durch die Informationsübertragungsvorrichtung in Stufe (i) durch Auswahl aus der Geräte- und/oder Adressinformationen der zentralen Regeleinheit(en) (2) aus einer auf der Informationsübertragungsvorrichtung gespeicherten Informationsliste oder durch Übertragung der Geräte- und/oder Adressinformationen der zentralen Regeleinheit(en) (2) von der zentralen Regeleinheit (2)/den zentralen Regeleinheiten an die Informationsübertragungsvorrichtung erfolgt.

4. Verfahren gemäß einem der Ansprüche 1 bis 3, **dadurch gekennzeichnet, dass** das Erfassen der Geräte- und/oder Adressinformationen des dezentralen Geräts (4, 4', 4") durch die Informationsübertragungsvorrichtung in Stufe (ii) durch Auswahl aus der Geräte- und/oder Adressinformationen des dezentralen Geräts (4, 4', 4") aus einer auf der Informationsübertragungsvorrichtung gespeicherten Informationsliste oder durch Übertragung der Geräte- und/oder Adressinformationen des dezentralen Geräts (4, 4', 4") von dem dezentralen Gerät an die Informationsübertragungsvorrichtung erfolgt.

5. Verfahren gemäß Anspruch 3 oder Anspruch 4, **dadurch gekennzeichnet, dass** die Übertragung der Geräte- und/oder Adressinformationen der zentralen Regeleinheit(en) (2) von der zentralen Regeleinheit(en) (2) und/oder des dezentralen Geräts (4, 4', 4") von dem dezentralen Gerät (4, 4', 4") an die Informationsübertragungsvorrichtung jeweils unabhängig optisch, insbesondere durch ein aufgebrachtes charakteristisches Muster oder durch Aussenden von Lichtsignalen durch eine Leuchtdiode oder eine Matrix von Leuchtdioden zur Ausgabe eines charakteristischen Musters, durch Ausgabe eines Musters oder einer Folge von Mustern durch eine Reihe von beleuchteten Symbolen, oder unter Verwendung einer Funkkommunikation, insbesondere WiFi oder Bluetooth oder NFC, erfolgt.

6. Verfahren gemäß einem der gemäß Anspruch 1 bis 5, **dadurch gekennzeichnet, dass** eine Anbindung des dezentralen Geräts (4, 4', 4") zur Kommunikation und/oder Datenverteilung an die zentrale Regelungseinheit(en) (2) kabelgebunden, insbesondere als ein elektronisches Bussystem, ausgebildet ist oder per Funk erfolgt.

7. Verfahren gemäß einem der gemäß Anspruch 1 bis 6, **dadurch gekennzeichnet, dass** das dezentrale Gerät (4, 4', 4") als Raumtemperaturregler, Raumtemperaturfühler, Luftfeuchtigkeitsmesser, Anwesenheitserkennungseinrichtung, Heizkörperregler, Regeleinheit für andere Komponenten, Außenfühler, ein Fenster- oder Türkontakt und dergleichen, als eine der vorgenannten Vorrichtungen, die zur Eingabe von Vorgaben durch den Nutzer sowie zur Ausgabe von Informationen an den Nutzer eingerichtet ist, oder als eine Kombination dieser Vorrichtungen ausgebildet ist.

8. Regelungssystem (1) zur Verteilung der Heiz- und/oder Kühlleistung eines Heiz- und/oder Kühlsystems, insbesondere bei der Beheizung und/oder Kühlung von Räumen oder Bereichen von Gebäuden oder Objekten, das eine oder mehrere zentrale Regeleinheiten (2) und mehrere dezentrale Geräte (4, 4', 4") zur Übermittlung von Sensorwerten, Zustandssignalen und/oder durch den Nutzer eingegebenen Informationen umfasst,
**dadurch gekennzeichnet, dass**
die dezentralen Geräte (4, 4', 4") und die zentrale Regeleinheit(en) (2) zur Übermittlung und zum Empfangen von Geräte- und/oder Adressinformationen des dezentralen Geräts (4, 4', 4") oder der zentralen Regeleinheit(en) (2) an eine bzw. von einer Informationsübertragungsvorrichtung eingerichtet ist/sind und dass das mindestens eine dezentrale Gerät (4, 4', 4") und die zentrale Regeleinheit(en) (2) zur Bereitstellung der Operationen zur Durchführung eines Verfahrens nach einem der Ansprüche 1 bis 7 ausgebildet sind.

## Claims

1. Method for assigning a decentralized device (4, 4', 4") of a control system (1), which comprises one or more central control units (2), wherein the control unit(s) (2) each have several control channels, and several decentralized devices (4, 4', 4") for transmitting sensor values, status signals and/or information entered by the user, for distributing the heating and/or cooling power of a heating and/or cooling system, in particular in the heating and/or cooling of rooms or sections of buildings or objects, to one control channel or several control channels of a central control unit (2) or several central control units, wherein the decentralized device (4, 4', 4") and the central control unit(s) (2) are adapted to transmit and receive device and/or address information of the decentralized device (4, 4', 4") or the central control unit (2) to or from an information transmission device,
**characterized in that** the method comprises the following steps:
(i) registering the device and/or address information of the central control unit (2) or the central control units by the information transmission device;
(ii) registering the device and/or address information of the decentralized device (4, 4', 4") by the information transmission device;
(iii) generating a logical link between the decentralized device (4, 4', 4") and one or more central control units (2);
(iv) transmitting an information to the central control unit (2) or the central control units that the decentralized device is to be assigned to one or more control channels of the respective central control unit (2); and
(v) storing the assignment or assignments by the central control unit (2) or the central control units.

2. Method according to claim 1, **characterized in that** steps (i) to (v) are passed through for more than one decentralized device (4, 4', 4"), in particular for all decentralized devices (4, 4', 4").

3. Method according to claim 1 or claim 2, **characterized in that** registering the device and/or address information of the central control unit(s) (2) by the information transmission device in step (i) is carried out by selecting from the device and/or address information of the central control unit(s) (2) from an information list stored on the information transmission device or by transmitting the device and/or address information of the central control unit(s) (2) from the central control unit(s) (2) to the information transmission device.

4. Method according to any one of claims 1 to 3, **characterized in that** registering the device and/or address information of the decentralized device (4, 4', 4") by the information transmission device in step (ii) is carried out by selecting from the device and/or address information of the decentralized device (4, 4', 4") from an information list stored on the information transmission device or by transmitting the device and/or address information of the decentralized device (4, 4', 4") from the decentralized device to the information transmission device.

5. Method according to claim 3 or claim 4, **characterized in that** the transmission of the device and/or address information of the central control unit(s) (2) from the central control unit(s) (2) and/or of the decentralized device (4, 4', 4") from the decentralized device (4, 4', 4") to the information transmission device is carried out in each case independently optically, in particular by means of an applied characteristic pattern or by emitting light signals through a light emitting diode or a matrix of light emitting diodes to output a characteristic pattern, by outputting a pattern or a sequence of patterns through a series of illuminated symbols, or by using radio communication, in particular WiFi or Bluetooth or NFC.

6. Method according to one of the methods according to claims 1 to 5, **characterized in that** a connection of the decentralized device (4, 4', 4") for communication and/or data distribution to the central control unit(s) (2) is designed to be cable-connected, in particular as an electronic bus system, or is carried out by radio communication.

7. Method according to claims 1 to 6, **characterized in that** the decentralized device (4, 4' 4") is designed as a room temperature controller, room temperature sensor, air humidity meter, presence detection device, radiator controller, control unit for other components, outdoor sensor, a window or door contact and the like, as one of the aforementioned devices which is adapted to inputting specifications by the user and outputting information to the user, or as a combination of these devices.

8. Control system (1) for distributing the heating and/or cooling power of a heating and/or cooling system, in particular for heating and/or cooling rooms or sections of buildings or objects, which comprises one or more central control units (2) and several decentralised devices (4, 4', 4") for transmitting sensor values , state signals and/or information entered by the user, wherein the decentralized devices (4, 4', 4") and the central control unit(s) (2) are adapted to transmit and receive device and/or address information of the decentralized device (4, 4', 4") or the central control unit(s) (2) to or from an information transmission device and
**characterized in that**
the at least one decentralized device (4, 4', 4") and the central control unit(s) (2) are designed to provide the operations for carrying out a method according to one of the claims 1 to 7.

## Revendications

1. Procédé d'attribution d'un appareil décentralisé (4, 4', 4") d'un système de régulation (1), qui comprend une ou plusieurs unités de régulation centralisées (2), la/les unité(s) de régulation (2) comportant respectivement plusieurs canaux régulateurs, et plusieurs appareils décentralisés (4, 4', 4") destinés à transmettre des valeurs de capteur, des signaux d'état et/ou des informations saisies par l'utilisateur, permettant la distribution de la puissance de chauffage et/ou de refroidissement d'un système de chauffage et/ou de refroidissement, en particulier lors du chauffage et/ou du refroidissement de pièces ou de zones de bâtiments ou d'objets, à un canal régulateur ou plusieurs canaux régulateurs d'une unité de régulation centralisée (2) ou plusieurs unités de régulation centralisées, l'appareil décentralisé (4, 4', 4") et la/les unité(s) de régulation centralisée(s) (2) étant conçus pour la transmission et la réception d'informations relatives à l'appareil et/ou à l'adresse de l'appareil décentralisé (4, 4', 4") ou de l'unité de régulation centralisée (2) à un dispositif de transmission d'informations ou en provenance de celui-ci,
**caractérisé en ce que**
le procédé comprend les étapes suivantes :
(i) détection des informations relatives à l'appareil et/ou à l'adresse de l'unité de régulation centralisée (2) ou des unités de régulation centralisées au moyen du dispositif de transmission d'informations ;
(ii) détection des informations relatives à l'appareil et/ou à l'adresse de l'appareil décentralisé (4, 4', 4") au moyen du dispositif de transmission d'informations ;
(iii) génération d'un asservissement logique entre l'appareil décentralisé (4, 4', 4") et une ou plusieurs unités de régulation centralisées (2) ;
(iv) transmission d'une information à l'unité de régulation centralisée (2) ou aux unités de régulation centralisées, selon laquelle l'appareil décentralisé est à attribuer respectivement à un ou plusieurs canaux de régulation de l'unité de régulation centralisée (2) respective ; et
(v) enregistrement de l'attribution ou des attributions au moyen de l'unité de régulation centralisée (2) ou des unités de régulation centralisées.

2. Procédé selon la revendication 1, **caractérisé en ce que** les étapes (i) à (v) sont exécutées pour plus d'un appareil décentralisé (4, 4', 4"), en particulier pour tous les appareils décentralisés (4, 4', 4").

3. Procédé selon la revendication 1 ou la revendication 2, **caractérisé en ce que** la détection des informations relatives à l'appareil et/ou à l'adresse de la ou des unité(s) de régulation centralisée(s) (2) par le dispositif de transmission d'informations de l'étape (i) est effectuée par une sélection parmi les informations relatives à l'appareil et/ou à l'adresse de la / des unité(s) de régulation centralisée(s) (2) dans une liste d'informations enregistrée sur le dispositif de transmission d'informations ou par la transmission, par l'unité de régulation centralisée (2)/les unités de régulation centralisées, des informations relatives à l'appareil et/ou à l'adresse de la / des unité(s) de régulation centralisée(s) (2) au dispositif de transmission d'informations.

4. Procédé selon l'une des revendications 1 à 3, **caractérisé en ce que** la détection des informations relatives à l'appareil et/ou à l'adresse de l'appareil décentralisé (4, 4', 4") par le dispositif de transmission d'informations de l'étape (ii) est effectuée par une sélection parmi les informations relatives à l'appareil et/ou à l'adresse de l'appareil décentralisé (4, 4', 4") dans une liste d'informations enregistrée sur le dispositif de transmission d'informations ou par la transmission, par l'appareil décentralisé, des informations relatives à l'appareil et/ou à l'adresse de l'appareil décentralisé (4, 4', 4") au dispositif de transmission d'informations.

5. Procédé selon la revendication 3 ou la revendication 4, **caractérisé en ce que** la transmission des informations relatives à l'appareil et/ou à l'adresse de la / des unité(s) de régulation centralisée(s) (2) par la/les unité(s) de régulation centralisée(s) (2) et/ou de l'appareil décentralisé (4, 4', 4") par l'appareil décentralisé (4, 4', 4") au dispositif de transmission d'informations est effectuée respectivement indépendamment de manière optique, en particulier par un dessin caractéristique appliqué ou par l'émission de signaux lumineux par une diode électroluminescente ou une matrice de diodes électroluminescentes destinée à émettre un dessin caractéristique, par l'émission d'un dessin ou d'une succession de dessins par une série de symboles éclairés, ou par l'utilisation d'une communication radio, en particulier Wi-Fi ou Bluetooth ou NFC.

6. Procédé selon l'une des revendications 1 à 5, **caractérisé en ce qu'**un raccordement de l'appareil décentralisé (4, 4', 4") à la/aux unité(s) de régulation centralisée(s) (2) pour la communication et/ou la distribution de données est réalisé par câble, en particulier sous la forme d'un système de bus électronique, ou est effectué par radio.

7. Procédé selon l'une des revendications 1 à 6, **caractérisé en ce que** l'appareil décentralisé (4, 4', 4") est réalisé sous la forme d'un thermostat d'ambiance, d'un capteur de température ambiante, d'un hygromètre, d'un dispositif détecteur de présence, d'un thermostat de radiateur, d'une unité de régulation pour d'autres composants, d'un capteur extérieur, d'un contact de fenêtre ou de porte et similaires, de l'un des dispositifs mentionnés précédemment, qui sont conçus pour la saisie d'objectifs par l'utilisateur ainsi que pour la sortie d'informations pour l'utilisateur, ou sous la forme d'une combinaison de ces dispositifs.

8. Système de régulation (1) permettant la distribution de la puissance de chauffage et/ou de refroidissement d'un système de chauffage et/ou de refroidissement, en particulier lors du chauffage et/ou du refroidissement de pièces ou de zones de bâtiments ou d'objets, qui comprend une ou plusieurs unités de régulation centralisées (2) et plusieurs appareils décentralisés (4, 4', 4") pour transmettre des valeurs de capteur, de signaux d'état et/ou des informations saisies par l'utilisateur,
les appareils décentralisés (4, 4', 4") et la/les unité(s) de régulation centralisée(s) (2) étant conçus pour la transmission et la réception d'informations relatives à l'appareil et/ou à l'adresse de l'appareil décentralisé (4, 4', 4") ou de la / des unité(s) de régulation centralisée(s) (2) à un dispositif de transmission d'informations ou en provenance de celui-ci, **caractérisé en ce que** l'au moins un appareil décentralisé (4, 4', 4") et la/les unité(s) de régulation centralisée(s) (2) sont réalisés pour la mise en place des opérations permettant d'exécuter un procédé selon l'une des revendications 1 à 7.
